(19) Europäisches Patentamt
European Patent Office
Office européen des brevets

(11) **EP 2 733 649 A1**

(12) **EUROPEAN PATENT APPLICATION**

(43) Date of publication:
**21.05.2014 Bulletin 2014/21**

(51) Int Cl.:
***G06Q 10/02*** *(2012.01)*

(21) Application number: **12306426.3**

(22) Date of filing: **15.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
• **Singer Joel**
**06600 Antibes (FR)**

• **Hasnas, Sergiu**
**06700 St Laurent du Var (FR)**
• **De la Crouee Rémi**
**06600 Antibes (FR)**
• **Bareges, Matthieu**
**06100 Nice (FR)**
• **Cany  Benjamin**
**06600 Antibes (FR)**

(74) Representative: **Coulon, Ludivine**
**Gevers Patents**
**Holidaystraat 5**
**1831 Diegem (BE)**

(54) **Use of group materialization rate to release inventory space**

(57)    A method, apparatus and program product utilize a materialization rate of a group booking to reduce the potential underutilization of travel provider inventory due to cancelations associated with the group booking. In particular, a group quantity associated with a group booking for a particular travel segment is distributed to one or more individual booking classes for that travel segment, and the availability of the individual booking classes is thereafter adjusted based on the materialization rate associated with the group booking. As such, the availability of the individual booking classes may effectively be increased to account for the likelihood of cancelations associated with group booking, and thereby open the individual booking classes to additional bookings.

FIG. 1

EP 2 733 649 A1

**Description**

**Field of the Invention**

The exemplary embodiments of this invention relate generally to revenue management for the travel and tourism industry and, more specifically, relate to computer-implemented inventory systems and revenue management systems used in the travel industry.

**Background of the Invention**

In order to optimize revenue, the airline industry faces a number of complex issues directed toward balancing the demand from customers and the supply in terms of the airlines' respective capacities for transporting passengers. Bookings of passengers on flights are typically made either on an individual basis, e.g., via individual bookings for individual passengers or small groups of passengers, or on a group basis, where reservations are made to accommodate a relatively large party of passengers, e.g., school groups, church groups, tour groups, etc. desiring travel to the same destination.

Group travel requests, in particular, may be an important part of the overall business of an airline, and appropriate group revenue management may represent an important revenue opportunity. Group travel requests are typically characterized by a lack of pre-defined, published fares, as for many group travel requests, the expected revenue/group quote is individually calculated for each group by airline group revenue management analysts. Group travel request originators typically send group travel requests to airline sales agents who then either calculate the price based on airline group revenue management analyst indications (e.g., price grids, adjustments, etc.) or based on a group quote directly calculated by airline group revenue management analysts.

In addition, group travel requests are typically initiated far in advance of the date(s) of travel (often 6-12 months in advance), and are often more price sensitive than schedule sensitive. In addition, cancelations often do not involve a penalty even if made close to departure.

Given these characteristics, group request originators tend to overestimate their needs, and furthermore, a reasonable likelihood exists that cancelations will occur prior to departure. Consequently, a risk exists that some of the inventory that was previously allocated to a group request, and that could otherwise have been sold and allocated to individual bookings, will go unused, and thus result in lost revenue for the travel provider.

Moreover, group travel requests, and the group bookings resulting therefrom, can potentially require a significant portion of the overall flight capacity of an aircraft, and as a result, the overall impact on a flight in case of possible cancellations can be significant. For example, a cancellation of 50 travelers in a group booking for 100 travelers travelling on an aircraft with a capacity of 200 would have a significant impact on the final load factor for the aircraft, and would present a significant loss of revenue for the airline.

Airlines have traditionally allowed for some overbooking of flights to account for the possibility that cancelations will occur. Flights that remain overbooked at the time of departure, however, can lead to traveler frustration for those who are required to take later flights and/or additional costs to the airline as a result of compensating travelers for their inconvenience. While attempts have been made to predict overbooking levels to balance the competing goals of maximizing flight capacity and minimizing the frequency and costs of travelers being moved to later flights, group bookings are not properly accounted for in conventional overbooking predictions, thereby leading to inaccurate predictions and in many cases, loss of revenue for flights on which group bookings have been made.

Consequently, a significant need exists in the art for an improved manner of managing group travel requests and group bookings to minimize adverse the impacts of cancelations and underutilization of inventory, and thereby maximize revenue.

**Summary of the Invention**

The invention addresses these and other problems associated with the prior art by providing in one aspect a method, apparatus and program product that utilize a materialization rate of a group booking to reduce the potential underutilization of travel provider inventory due to cancelations associated with the group booking. In particular, a group quantity associated with a group booking for a particular travel segment is distributed to one or more individual booking classes for that travel segment, and the availability of the individual booking classes is thereafter adjusted based on the materialization rate associated with the group booking. As such, the availability of the individual booking classes may effectively be increased to account for the likelihood of cancelations associated with group booking, and thereby open the individual booking classes to additional bookings.

Therefore, consistent with one aspect of the invention, travel provider inventory availability for a travel segment subject to at least one group booking is made by distributing a group quantity associated with the group booking to at least one of a plurality of individual booking classes associated with the travel segment using at least one hardware processor, and for at least a first booking class among the plurality of individual booking classes to which at least a portion of the group quantity has been distributed, adjusting an availability for the first booking class based upon a materialization rate associated with the group booking.

These and other advantages and features, which characterize the invention, are set forth in the claims annexed hereto and forming a further part hereof. However, for a better understanding of the invention, and of the advantages and objectives attained through its use, reference should be made to the Drawings, and to the accompanying descriptive matter, in which there is described exemplary embodiments of the invention.

**Brief Description of the Drawings**

FIGURE 1 is a block diagram of a computer system configured to implement an availability calculation operation consistent with the invention.

FIGURE 2 is a block diagram of an example implementation of a computer system capable of implementing the availability calculator referenced in Fig. 1.

FIGURE 3 is a flowchart illustrating an exemplary sequence of steps performed by an availability calculator routine in the system of Figs. 1-2.

FIGURE 4 is a table illustrating two group bookings applied to an example flight segment upon which an availability operation calculation is calculated by the routine of Fig. 3.

FIGURE 5 is the table of Fig. 4, after virtually dispatching the group bookings to individual booking classes.

FIGURE 6 is the table of Fig. 4, after virtually dispatching the group bookings to individual booking classes in an alternate manner to Fig. 5.

FIGURE 7 is the table of Fig. 5, after a materialization rate adjustment.

FIGURE 8 is the table of Fig. 5, after materialization rate and risk factor adjustments.

FIGURE 9 is the table of Fig. 7, after calculation of class availability, and additionally including standard availability and standard availability with overbooking calculations.

**Detailed Description**

Embodiments consistent with the invention utilize a materialization rate of a group booking to reduce the potential underutilization of travel provider inventory due to cancelations associated with the group booking.

In particular, a group quantity associated with a group booking for a particular travel segment is distributed to one or more individual booking classes for that travel segment, and the availability of the individual booking classes is thereafter adjusted based on the materialization rate associated with the group booking. As such, the availability of the individual booking classes may effectively be increased to account for the likelihood of cancelations associated with group booking, and thereby release space blocked by the group booking and open the individual booking classes to additional bookings.

For the purpose of simplifying the discussion, the focus hereinafter will be on an implementation of the invention in connection with group bookings for air travel, such that a travel provider is typically an airline or air carrier. It will be appreciated, however, that the invention may also be utilized in connection with other applications in the travel industry where group bookings or reservations may be desired, e.g., rail travel, ship travel, hotels, etc. Therefore, the invention is not limited to the particular air travel implementation discussed hereinafter.

Furthermore, the discussion hereinafter focuses on a particular implementation of the invention in connection with yield-type revenue data. It will be appreciated, however, that the invention may be used in connection with other types of revenue data, e.g., bid price vectors, and thus, the invention is not limited to use solely with yield-type revenue data.

Other variations and modifications will be apparent to one of ordinary skill in the art.

Hardware and Software Environment

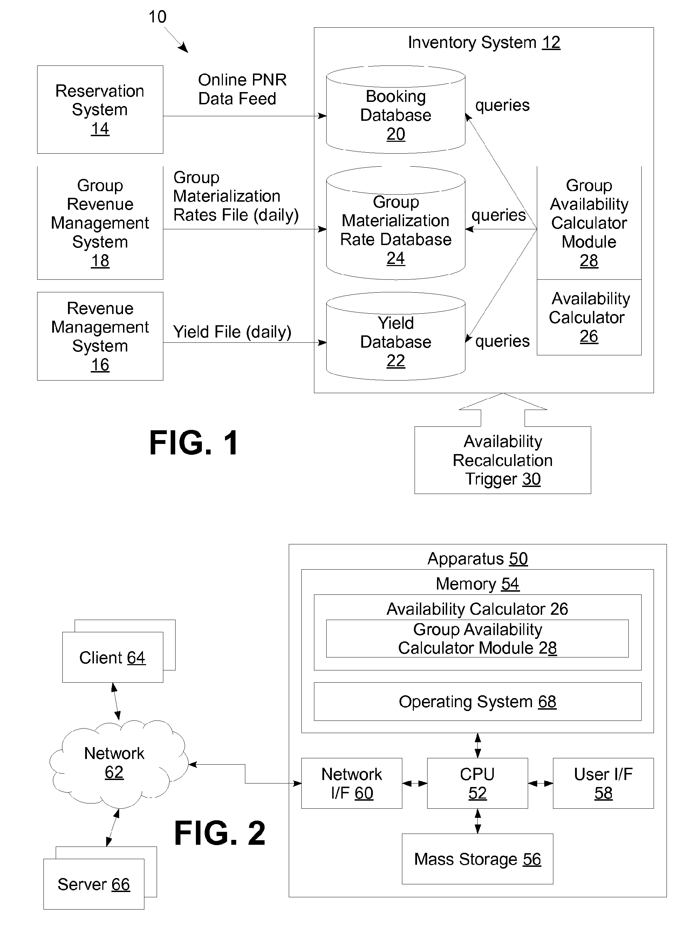

Turning now to the drawings, wherein like numbers denote like parts throughout the several views, Fig. 1 illustrates an exemplary data processing system 10 in which an availability calculation operation may be implemented. System 10 is illustrated as including a central service implemented by an inventory system 12, which is interfaced with various additional travel-related computer services, e.g., a reservation system 14, a revenue management system 16, and a group revenue management system 18.

Inventory system 12 primarily provides flight inventory information such as capacity, availability and flight structure (cabins, booking classes, legs) of the flights that are present in the database

Reservation system 14 primarily provides an online data feed of reservation information, typically in the form of Passenger Name Records (PNR's) accessible by a unique identifier. Each PNR typically includes the data relevant to a particular booking or reservation. For group bookings, an associated PNR may include a separate group request identifier that identifies the group. In some embodiments, a group PNR may omit some of the information stored in an individual PNR, e.g., traveler names and other identification information, and may simply include a quantity associated with the group booking.

Revenue management system 16 provides revenue data such as bid price values and/or yield values that may be utilized to guide an availability calculation operation. Typically a revenue management system attempts to optimize revenues through continual monitoring of passenger demand, market trends and pricing activity, and provide optimum inventory allocation. In addition, system 16 provides an authorization level (AU) for each booking class of a given travel segment, which represents the maximum number of inventory items the system recommends to sell for a given booking class.

From the perspective of availability calculation operations as disclosed herein, revenue management system 18, for example, may provide data such as yields, bid price, expected to board data, etc. Yield, for example, is a value that is typically defined for each booking class of a given travel solution, and is an estimation of how much revenue a carrier (e.g., airline) receives from a sale in the associated booking class and travel solution.

Group revenue management system 18, which may be implemented within revenue management system 16 in some embodiments, provides additional group-related information, and in particular, materialization rates for various group originators. Materialization rate, within the context of the invention, is generally related to (e.g., as a ratio between) the quantities allocated to group bookings occupied at departure time and the group quantities that were requested initially in group travel requests. In some embodiments, the materialization rate may be defined per group originator (e.g., travel agent or tour operator) and aggregated at a regional level.

It will be appreciated that systems 12, 14, 16 and/or 18 may be combined in some implementations and may be implemented within the same or in different computer systems. Moreover, systems 12, 14, 16 and/or 18 may be operated and/or managed by the same or different entities, e.g., a travel provider or a third party that supports multiple travel providers.

System 12 as illustrated herein includes various local databases 20, 22, 24 that cache information from systems 14, 16, and 18 and thereby reduce the performance overhead that would otherwise be required to obtain the data stored in such systems when performing availability calculation operations. Booking database 20 caches individual and group PNR's from reservation system 14, yield database 22 caches yield data from revenue management system 16, and group materialization rate database 24 caches group materialization rates from group revenue management system 18.

Given that yield data and group materialization rates are typically not dynamically changing information, such information may be retrieved on a periodic basis, e.g., daily or a shorter or longer time frame as desired. Given also that bookings are typically more dynamic in nature, it may be desirable instead to retrieve PNR's from reservation system 14 on a more dynamic basis, e.g., as bookings are created. It will be appreciated, however, that any of databases 20-24 may be omitted in some embodiments, such that inventory system 12 accesses the information stored therein directly from the respective systems 14-18.

Implemented within system 12 is an availability calculator 26, which is used to calculate the availability of inventory items on flights and flight segments, and for the purpose of making materialization rate-based adjustments of travel provider inventory availability in a manner consistent with the invention, a group availability calculator module 28 may be provided within or otherwise accessible to availability calculator 26. As will become more apparent below, availability calculator 26 is typically activated in response to an availability recalculation trigger 30, e.g., selling a new booking, canceling a booking, flight reoptimization, a schedule change, or any other time that a change is made to a particular flight or segment.

System 12 may be implemented in a number of manners consistent with the invention. Fig. 2, for example, illustrates an exemplary apparatus 50 within which various steps from an availability calculation operation may be implemented in a manner consistent with the invention. For the purposes of the invention, computer 50 may represent practically any type of computer, computer system or other programmable electronic device. Moreover, computer 50 may be implemented using one or more networked computers, e.g., in a cluster or other distributed computing system, or may be implemented within a single computer or other programmable electronic device, e.g., a desktop computer, laptop computer, handheld computer, cell phone, set top box, etc.

Computer 50 typically includes a central processing unit 52 including at least one microprocessor coupled to a memory 54, which may represent the random access memory (RAM) devices comprising the main storage of computer 50, as well as any supplemental levels of memory, e.g., cache memories, non-volatile or backup memories (e.g., programmable or flash memories), read-only memories, etc. In addition, memory 54 may be considered to include memory storage physically located elsewhere in computer 50, e.g., any cache memory in a processor in CPU 52, as well as any storage capacity used as a virtual memory, e.g., as stored on a mass storage device 56 or on another computer coupled to computer 50. Computer 50 also typically receives a number of inputs and outputs for communicating information externally. For interface with a user or operator, computer 50 typically includes a user interface 58 incorporating one or more user input devices (e.g., a keyboard, a mouse, a trackball, a joystick, a touchpad, and/or a microphone, among others) and a display (e.g., a CRT monitor, an LCD display panel, and/or a speaker, among others). Otherwise, user input may be received via another computer or terminal.

For additional storage, computer 50 may also include one or more mass storage devices 56, e.g., a floppy or other removable disk drive, a hard disk drive, a direct access storage device (DASD), an optical drive (e.g., a CD drive, a DVD drive, etc.), and/or a tape drive, among others. Furthermore, computer 50 may include an interface 60 with one or more networks 62 (e.g., a LAN, a WAN, a wireless network, and/or the Internet, among others) to permit the communication of information with other computers and electronic devices, e.g., one or more client computers 64 (e.g., for interfacing with agents 22, 24 and officers 26) and one or more servers 66 (e.g., implementing systems 14, 16, and 18 and engine 20). It should be appreciated that computer 50 typically includes suitable analog and/or digital interfaces between CPU 52 and each of components 54, 56, 58 and 60 as is well known in the art. Other hardware environments are contemplated within the context of the invention.

Computer 50 operates under the control of an operating system 68 and executes or otherwise relies upon various computer software applications, components, programs, objects, modules, data structures, etc., e.g., availability calculator 26 and group availability calculator module 28 therein. Moreover, various applications, components, programs, objects, modules, etc. may also execute on one or more processors in another computer coupled to computer 50 via network 62, e.g., in a distributed or client-server computing environment, whereby the processing required to implement the functions of a computer program may be allocated to multiple computers over a network.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

Such computer readable media may include computer readable storage media and communication media. Computer readable storage media is non-transitory in nature, and may include volatile and non-volatile, and removable and non-removable media implemented in any method or technology for storage of information, such as computer-readable instructions, data structures, program modules or other data. Computer readable storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium that can be used to store the desired information and which can be accessed by computer 50. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

Various program code described hereinafter may be identified based upon the application within which it is implemented in a specific embodiment of the invention. However, it should be appreciated that any particular program nomenclature that follows is used merely for convenience, and thus the invention should not be limited to use solely in any specific application identified and/or implied by such nomenclature. Furthermore, given the typically endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the invention is not limited to the specific organization and allocation of program functionality described herein.

Those skilled in the art will recognize that the exemplary environment illustrated in Figs. 1 and 2 is not intended to limit the present invention. Indeed, those skilled in the art will recognize that other alternative hardware and/or software environments may be used without departing from the scope of the invention.

Materialization Rate-Based Adjustment of Travel Provider Inventory Availability

An availability calculation operation consistent with the invention calculates availability of one or more classes on a travel segment, and upon which at least one group booking, each with an associated group quantity, has been made. In this regard, a group booking is typically a reservation that has been generated in association with a group travel request for a given origin and destination, cabin, possible travel dates etc. for a quantity of travelers, and typically above a threshold quantity for which there are no predefined fares, as may be the case, for example, for individual bookings. The group quantity is typically the number of travelers associated with a group travel request and for which a corresponding number of inventory items from an airline's inventory is desired.

A group booking is typically associated with a group request originator, which may be, for example, a travel agent, tour operator, etc. In addition, a group booking typically is associated with one or more travel segments in one or more travel solutions upon which air travel has been reserved for the group quantity, where a travel segment is typically a leg or a group of consecutive legs from a boarding point to the off point on a given flight (i.e. same flight number). A travel segment may be mono leg or multi-leg, where a leg is the space between two consecutive scheduled stops on any given flight, i.e., a physical transfer of an aircraft from one airport to another.

On a given travel segment, multiple booking classes are typically defined. A booking class is a marketing segmentation used for reservation control (typically related to expected revenue). Traditionally a booking class gathers bookings made for the same kind of product (e.g., 14 days advance purchase booking, non-refundable bookings, etc.), and is designated by a one letter code. Typically, group bookings are assigned to a separate booking class (e.g., identified by a "G" code). At any given time, a booking class on a particular travel segment includes a booking class availability, which is the number or quantity of inventory items that can be sold on a class of a segment at a given time.

In embodiments consistent with the invention, a group quantity associated with a group booking for a particular travel segment is distributed to one or more individual booking classes for that travel segment, and the availability of the individual booking classes is thereafter adjusted based on the materialization rate associated with the group booking. As such, the availability of the individual booking classes may effectively be increased to account for the likelihood of cancelations associated with group booking, and thereby open the individual booking classes to additional bookings.

As noted above, a travel provider typically defines a dedicated booking class of their inventory for group bookings. This specific class is typically referred to as a group class and typically maps to the 'G' character class. Prices paid by the passengers of group bookings are typically referred to as group fares, and are typically different for different group bookings in the same group class. The group fare is typically calculated by an airline group revenue management system and is stored in a group PNR in the reservation system.

Group fares are typically not stored in conventional airline inventory systems as they typically are not useful to compute availability. In the context of the invention, however, it may be desirable for the group fare to be transmitted at the End Of Transaction (EOT) of a group PNR creation by the reservation system to the inventory system so that the group fare may be stored in the airline inventory system in the booking database (e.g., database 20 in Fig. 1). To link a booking and a group fare, it may be desirable to store a group request identifier in the PNR. This group request identifier may be provided in the PNR feed to the inventory system, so that a search may be performed in the booking database for the group booking having a matching identifier. In some embodiments, this matching group booking may be enriched by adding group fare information.

Also, in the illustrated embodiment, for each group booking, the group revenue management system also associates a group materialization rate, which is calculated for example by taking the historical materialization rate of the group originator, e.g., over the same period one year in the past. Other manners of determining a materialization rate may be used in the alternative, e.g., over different time periods, or based on other factors such as the type of group or traveler, a location of origin of the group booking, or a time associated with the group booking. For example, group bookings made for a tour of schoolchildren may have higher materialization rates than groups on golfing trips, group bookings from certain countries may experience lower materialization rates than other countries, and group bookings made closer to the time of departure may have historically higher materialization rates than those made farther away in time. It will be appreciated that any number of manners of calculating or predicting materialization rates may be used in embodiments consistent with the invention.

Also, in some embodiments of the invention, it may be desirable to mitigate the potential adverse effects of low materialization rates for some group originators through the use of additional data, such as a risk factor. This risk factor, which may be configurable by a travel provider, may be used to control how aggressive to be in overbooking. Other information may be used in addition to materialization rate in other embodiments of the invention.

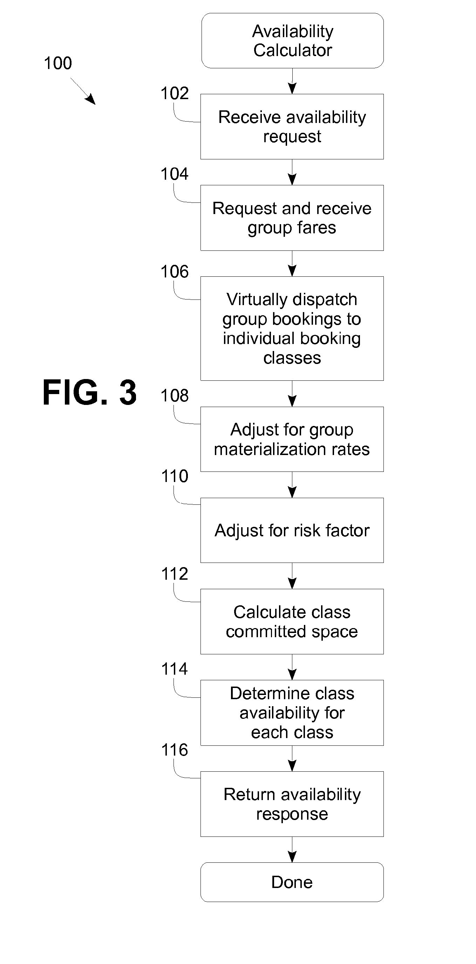

Fig. 3 illustrates an example implementation of an availability calculator routine 100 performed by availability calculator 26 of Figs. 1-2 in connection with calculating the availability on a travel segment on which one or more group bookings have been made. First, in step 102, an availability request is received, e.g., in response to the sell or cancelation of an inventory item, a schedule change, a flight reoptimization, etc. The frequency of such availability requests typically depends on the number of days before departure, and it has been found that in some systems on average there are about 2 to 3 events for flights departing far in the future whereas there might be about 20 to 30 daily events for flights departing in the coming days.

For an availability request for a segment for which group bookings have been made, an availability calculation may be considered to include two primary steps. First, group bookings are "virtually dispatched" from the group class to other booking classes depending on the underlying group fares for those group bookings. Second, group materialization rates are used to adjust the actual group sizes or quantities in order to reduce the quantity of inventory items in those booking classes allocated to the group bookings and thereby increase the availability of those booking classes.

As such, routine 100, in response to an availability request received in block 102, requests and receives a group fare associated with each group booking associated with the travel segment for which an availability request has been made (block 104). Next, block 106 virtually dispatches group bookings to individual booking classes, and block 108 adjusts the group quantity allocated to each affected individual booking class based on materialization rate. In addition, in some embodiments, block 110 may perform an additional adjustment based on a risk factor. Thereafter, in block 112, a committed space for each class may be calculated based upon all of the group and individual bookings for the travel segment, and from these committed space values, a class availability may then be calculated for each class in block 114. A response to the availability request is then returned in block 116, and routine 100 is complete.

Further specifics regarding the virtual dispatch, adjustment, and availability calculation operations discussed above are provided below.

Virtual dispatch

In the illustrated embodiments, a virtual dispatch operation attempts to place group bookings into one or more individual booking classes in a manner that most closely matches the per-traveler group fares for the group bookings with the yields for the individual booking classes. The dispatch is "virtual" in the sense that the dispatch is only temporary, and only for the purpose of availability calculation. For all other purposes, the group bookings remain in the booking class.

In one embodiment, for example, each group booking may be virtually moved to the booking class having a yield that is closest to the group fare, such that after all group bookings have been virtually dispatched, the group class is empty. For example, the selected individual booking class for a given group booking may be that class in which the absolute value of the difference between the class yield and the group fare is minimized.

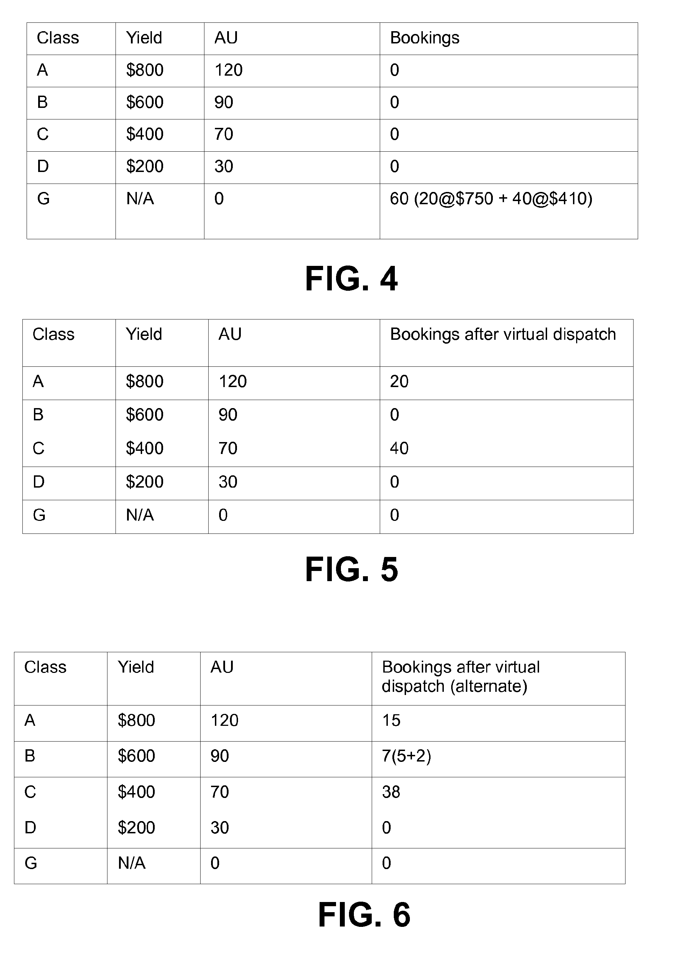

By way of example, Fig. 4 illustrates a hypothetical travel segment having four individual booking classes A, B, C, D, each having an associated yield of $800, $600, $400 and $200, as well as an associated AU of 120, 90, 70, and 30. Initially, and for the purposes of simplifying the explanation, it is assumed that there are no individual bookings in any of these classes, such that booking counters for each of the individual classes are initially set at zero.

In addition, a group booking class G is illustrated with two group bookings, a first, for 20 travelers with a per-traveler group fare of $750, and a second, for 40 travelers with a per-traveler group fare of $410, for a total of 60 travelers associated with group bookings for this travel segment.

Fig. 5 illustrates an example virtual dispatch of the group bookings of Fig. 5 into individual booking classes. For the first group booking, the class having a yield that is closest to the per-traveler group fare of $750 is class A, with a yield of $800, and for the second group booking, the class having a yield that is closest to the per-traveler group fare of $410 is class C, with a yield of $400. Thus, in this example, the group quantity of 20 for the first group booking is virtually dispatched to class A and the group quantity of 40 for the second group booking is virtually dispatched to class C, incrementing the booking counters for classes A and C to 20 and 40, respectively.

In another embodiment, groups may be virtually dispatched by dispatching sub-quantities to the two booking classes having yields just below or just above the per-traveler group fares. In addition, in some embodiments, the sub-quantities may be selected so that the weighted average of the yields is approximately equal to the group fare. For example, sub-quantities $SQ_X$ and $SQ_Y$ to be dispatched to two booking classes X and Y may be determined by solving the following simultaneous equations:

$$Group\ Quote = \frac{[(Yield_x SQ]_x + Yield_y SQ_y)}{Group\ Quantity} \qquad (1)$$

$$Group\ Quantity = SQ_x + SQ_y \qquad (2)$$

Fig. 6, for example, illustrates an alternate virtual dispatch of sub-quantities to the two booking classes having yields above and below the group fares for two alternate group bookings. For the first group booking, with a per-traveler group fare of $750, the two individual booking classes with yields just above and just below the group fare are classes A and B, at $800 and $600 respectively, and by dispatching a sub-quantity of 15 to class A and a sub-quantity of 5 to class B, the aforementioned equations are met, as (15*$800 + 5*600) / (15 + 5) = $750.

Likewise, for the second group booking, with a per-traveler group fare of $410, the two individual booking classes with yields just above and just below the group fare are classes B and C, at $600 and $400 respectively, and by dispatching a sub-quantity of 2 to class B and a sub-quantity of 38 to class C, the aforementioned equations are met, as (2*$600 + 38*600) / (2 + 38) = $410.

It will be appreciated that in other embodiments, other algorithms may be used to virtually dispatch groups to one or more individual booking classes. For example, with the alternative algorithm discussed in connection with Fig. 6, where a group fare equals the yield of a single individual booking class, the group quantity may be virtually dispatched only to that single individual booking class. In addition, in some embodiments it may be desirable to virtually dispatch a group quantity to a single class having a yield that is just below or just above the group fare.

Materialization Rate/Risk Factor Adjustments

As noted above, in one embodiment of the invention, the virtually dispatched group quantities are adjusted in part based on a materialization rate associated with the group bookings. Doing so effectively decreases the group quantities to levels that are more indicative of what the quantities are expected to be at departure time. The materialization rate may be associated with a given group originator, as well as other information associated with the group booking, such as type of traveler, time of booking, and any additional historical or other information that may be predictive of the actual group quantity at departure time. A materialization rate may also be configurable via business rules, or in other manners appreciated by those of ordinary skill in the art.

In addition, in some embodiments, a risk factor may be defined in order to provide a margin to control the risk of passenger offload. The risk factor may be set based upon a number of factors, e.g., costs of overbooking that may vary by travel provider and/or country, and based upon how aggressive a travel provider might want to be in terms of overbooking.

In one embodiment, for example, materialization rate and risk factors may be defined in terms of percentages between 0 and 100%, such that an adjusted quantity to be applied to the group quantity or sub-quantity dispatched to a particular individual booking class is calculated as follows:

$$AQ = \text{Minimum}(Q, Q \times MR \times (1 + RF)) \qquad (3)$$

where Q is the group quantity dispatched to a particular individual booking class, AQ is the adjusted quantity, MR is the materialization rate and RF is the risk factor.

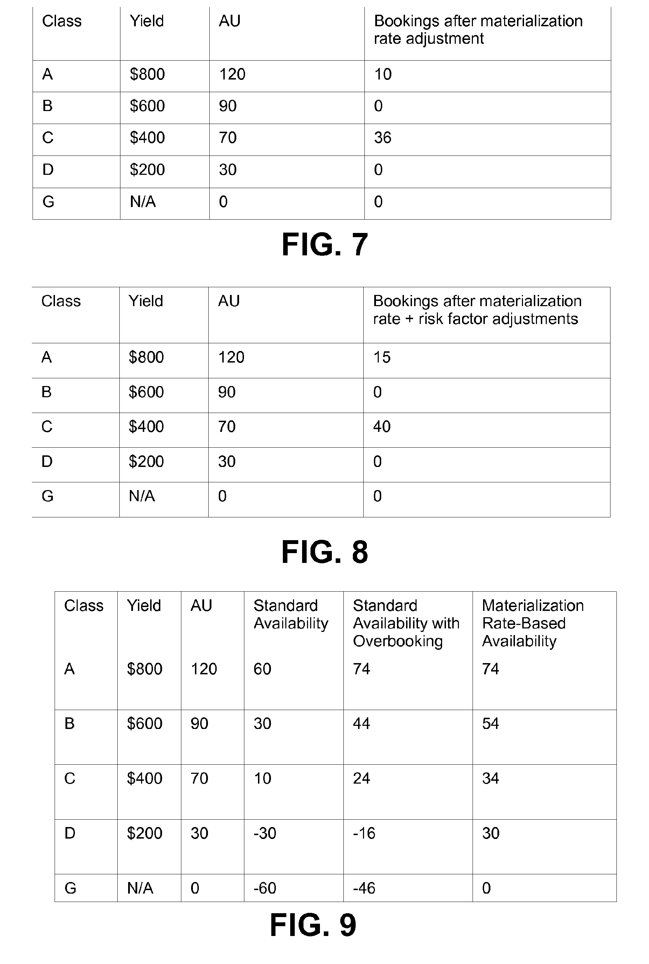

Fig. 7, for example, illustrates an example materialization rate adjustment performed on the virtually dispatched group quantities of Fig. 5 for the aforementioned first and second example group bookings, and assuming a materialization rate of 50% for the first group booking (20 @ $750) and a materialization rate of 90% for the second group booking (40 @ $410). As shown in this figure, the 50% materialization rate for the first group booking drops the quantity, and thus the booking counter for class A, from 20 to 10 (20*50%), while the 90% materialization rate for the second group booking drops the quantity, and thus the booking counter for class C, from 40 to 36 (40*90%), reflecting the relatively higher predicted materialization for the second group booking and group originator.

Fig. 8 illustrates an example adjustment based on both the aforementioned materialization rates and an additional risk factor of 50%. Taking both adjustments into account, the first group quantity is adjusted to 15 (20*50%*(1+50%)). The second group quantity, however, is adjusted back to the original 40 since the adjustments based on materialization rate and risk factor result in a value of 54 (40*90%*(1+50%)), which is larger than the actual group quantity.

Availability Calculation

As noted above, after group quantities/sub-quantities are adjusted based on materialization rates and/or risk factors, the availability of each individual booking class is calculated. Typically, class availability is calculated (e.g., in block 114 of Fig. 3) as the class AU minus the sum of the bookings done in that class and in all lower classes (i.e., classes with lower yields), where the bookings in each class are referred to as the class committed space (block 112 of Fig. 3).

Put another way, a booking counter for each booking class is calculated based upon the adjusted group quantities and any other bookings for the booking class, and an availability counter for each booking class is determined as a difference between the AU for the booking class and a sum of the booking counters for the booking class and any lower booking classes.

Fig. 9, for example, illustrates the calculated availability for each individual booking class based on the materialization rate-based adjustments made in Fig. 7 (and without any risk factor adjustments). Thus, for example, for class D, the availability is 30, based on an AU of 30 and no bookings in the class, and for class C, the availability is 34, based on an AU of 70, 36 bookings in class C, and no bookings in class D.

For class B, the availability is 54, based on an AU of 90, no bookings in classes B and D, and 36 bookings in class C. Finally, for class A, the availability is 74, based on an AU of 120, no bookings in classes B and D, 36 bookings in class C and 10 bookings in class A (120-(36+10)).

Fig. 9 also illustrates for the purposes of comparison a standard availability determination performed without the aforementioned virtual dispatch and materialization rate adjustments, where the availability for a class is determined by subtracting from the AU the sum of all bookings in the class and all lower classes. In addition, also for comparison purposes, the standard availability determination with standard overbooking is illustrated, whereby a constant cabin overbooking value (here 14) is added to the standard availability calculations.

As may be seen from these comparative numbers, the availability of class D, which was negative (i.e., closed) without virtual dispatch and materialization rate adjustment is now 30 (i.e., open), stemming in part from the fact that all travelers of the group bookings paid more than the yield of class D ($200). In addition, 10 additional inventory items are available in each of classes B and C. This is in line with revenue management concept of having a non-greedy nesting structure, meaning that bookings on high yield classes don't steal seats from lower yield classes. With the herein-disclosed techniques the inventory system implements this paradigm, whereas without, group bookings effectively steal random seats from other classes depending where the group class is in the nesting structure.

As such, an advantage of the herein-described techniques is that the knowledge of group fares and historical materialization rates may be used in some instances to maximize or otherwise increase travel provider revenue. The different fares for each group booking within a group class may be taken into account, and the application of group overbooking is typically more precise given the reliance on the materialization rate associated with each group booking. Furthermore, inventory items are typically released to the inventory system as soon as a group booking is made, in contrast to in a revenue management system that optimizes flights on a daily basis.

As another advantage, in many instances classes that would otherwise be closed in airline inventory may be re-opened, thereby attracting more travelers who may be able to obtain individual bookings otherwise precluded by group bookings. Also a more accurate prediction of the contribution of group bookings is taken into account, and in some instances leading to less expensive inventory items being made available to travelers.

In addition, based on the data feeds disclosed above, in many embodiments the availability calculation operations may be performed within an inventory system and without accessing a revenue management system.

It will be appreciated that some of the features of the exemplary embodiments of this invention may be used without the corresponding use of other features. In addition, various additional modifications may be made without departing from the spirit and scope of the invention. Therefore, the invention lies in the claims hereinafter appended.

**Claims**

1. A method of determining travel provider inventory availability for a travel segment subject to at least one group booking, the method comprising:

   distributing a group quantity associated with the group booking to at least one of a plurality of individual booking classes associated with the travel segment using at least one hardware processor; and
   for at least a first booking class among the plurality of individual booking classes to which at least a portion of the group quantity has been distributed, adjusting an availability for the first booking class based upon a materialization rate associated with the group booking.

2. The method of claim 1, wherein distributing the group quantity includes distributing the group quantity to the first booking class based upon a group fare associated with the group booking and revenue data associated with the first booking class.

3. The method of claim 1 or 2, wherein distributing the group quantity includes selecting the first booking class based upon the yield data associated with the first booking class being closest to the group fare from among the plurality of individual booking classes.

4. The method of claim 1 or 2, wherein distributing the group quantity includes distributing a first sub-quantity from the group quantity to the first booking class and a second sub-quantity from the group quantity to a second booking class from among the plurality of individual booking classes based upon the group fare being between a first yield value associated with the first booking class and a second yield value associated with the second booking class, and wherein the first and second sub-quantities are determined based upon a weighted average of the first and second yield values relative to the group fare.

5. The method of claim 1, wherein distributing the group quantity distributes a first quantity to the first booking class, and wherein adjusting the availability for the first booking class includes determining an adjusted first quantity for the first booking class, and wherein determining the adjusted first quantity includes decreasing the first quantity based upon the materialization rate.

6. The method of claim 5, wherein adjusting the availability for the first booking class further comprises adjusting the first quantity based upon a risk factor associated with a margin to be applied to reduce passenger offload.

7. The method of claim 5, wherein the materialization rate is between 0 and 100%, wherein adjusting the availability for the first booking class includes determining an adjusted quantity for the first booking class using the following formula:

$$AQ = Minimum(Q, Q \times MR \times (1 + RF));$$

and
wherein AQ is the adjusted quantity, Q is the first quantity, MR is the materialization rate and RF is a risk factor associated with a margin to be applied to reduce passenger offload.

8. The method of claim 5, further comprising determining the availability for the first booking class, including:

determining a booking counter for the first booking class based upon the adjusted first quantity and any other bookings for the first booking class;
determining booking counters for any lower booking classes among the plurality of booking classes relative to the first booking class; and
determining an availability counter for the first booking class as a difference between an authorization limit for the first booking class and a sum of the booking counters for the first booking class and any lower booking classes.

9. The method of any one of claims 1 to 8, wherein the materialization rate is determined based upon at least one of an originator of the group booking, a type of traveler associated with the group booking, a location of origin of the group booking, or a time associated with the group booking.

10. The method of any one of claims 1 to 9, wherein distributing the group quantity and adjusting the availability are performed in response to a trigger event.

11. The method of claim 10, wherein the trigger event is selected from the group consisting of a reservation sell request, a reservation cancellation request, an optimization request, or a schedule change.

12. The method of claim 10 or 11, further comprising receiving reservation data associated with the group booking, the reservation data including a group fare and the group quantity.

13. The method of any one of claims 10 to 12, further comprising periodically receiving updated materialization rate data.

14. An apparatus, comprising:

at least one processor; and
program code configured upon execution by the at least one processor to determine travel provider inventory availability for a travel segment subject to at least one group booking to perform the method according to any one of claims 1 to 13

15. A program product, comprising:

a computer readable medium; and
program code stored on the computer readable medium and configured upon execution by at least one processor to determine travel provider inventory availability for a travel segment subject to at least one group booking to perform the method according to any one of claims 1 to 13.

10

Reservation System 14 → Online PNR Data Feed →

Group Revenue Management System 18 → Group Materialization Rates File (daily) →

Revenue Management System 16 → Yield File (daily) →

Inventory System 12

Booking Database 20

Group Materialization Rate Database 24

Yield Database 22

queries

queries

queries

Group Availability Calculator Module 28

Availability Calculator 26

Availability Recalculation Trigger 30

## FIG. 1

Apparatus 50

Memory 54

Availability Calculator 26

Group Availability Calculator Module 28

Operating System 68

Client 64

Network 62

Server 66

Network I/F 60

CPU 52

User I/F 58

Mass Storage 56

## FIG. 2

**FIG. 3**

100

Availability
Calculator

102 — Receive availability
request

104 — Request and receive
group fares

106 — Virtually dispatch
group bookings to
individual booking
classes

108 — Adjust for group
materialization rates

110 — Adjust for risk factor

112 — Calculate class
committed space

114 — Determine class
availability for
each class

116 — Return availability
response

Done

| Class | Yield | AU | Bookings |
|-------|-------|------|-------------------------------|
| A | $800 | 120 | 0 |
| B | $600 | 90 | 0 |
| C | $400 | 70 | 0 |
| D | $200 | 30 | 0 |
| G | N/A | 0 | 60 (20@$750 + 40@$410) |

# FIG. 4

| Class | Yield | AU | Bookings after virtual dispatch |
|-------|-------|------|---------------------------------|
| A | $800 | 120 | 20 |
| B | $600 | 90 | 0 |
| C | $400 | 70 | 40 |
| D | $200 | 30 | 0 |
| G | N/A | 0 | 0 |

# FIG. 5

| Class | Yield | AU | Bookings after virtual dispatch (alternate) |
|-------|-------|------|---------------------------------------------|
| A | $800 | 120 | 15 |
| B | $600 | 90 | 7(5+2) |
| C | $400 | 70 | 38 |
| D | $200 | 30 | 0 |
| G | N/A | 0 | 0 |

# FIG. 6

| Class | Yield | AU | Bookings after materialization rate adjustment |
|-------|-------|-----|---------------------------------------------|
| A | $800 | 120 | 10 |
| B | $600 | 90 | 0 |
| C | $400 | 70 | 36 |
| D | $200 | 30 | 0 |
| G | N/A | 0 | 0 |

# FIG. 7

| Class | Yield | AU | Bookings after materialization rate + risk factor adjustments |
|-------|-------|-----|---------------------------------------------------------------|
| A | $800 | 120 | 15 |
| B | $600 | 90 | 0 |
| C | $400 | 70 | 40 |
| D | $200 | 30 | 0 |
| G | N/A | 0 | 0 |

# FIG. 8

| Class | Yield | AU | Standard Availability | Standard Availability with Overbooking | Materialization Rate-Based Availability |
|-------|-------|-----|-----------------------|----------------------------------------|-----------------------------------------|
| A | $800 | 120 | 60 | 74 | 74 |
| B | $600 | 90 | 30 | 44 | 54 |
| C | $400 | 70 | 10 | 24 | 34 |
| D | $200 | 30 | -30 | -16 | 30 |
| G | N/A | 0 | -60 | -46 | 0 |

# FIG. 9

Europäisches Patentamt

European Patent Office

Office européen des brevets

**EUROPEAN SEARCH REPORT**

Application Number

EP 12 30 6426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 413 271 A1 (AMADEUS SAS [FR]) 1 February 2012 (2012-02-01) * the whole document * ----- | 1-15 | INV. G06Q10/02 |
| X | US 2007/168245 A1 (DE MARCKEN CARL G [US] ET AL) 19 July 2007 (2007-07-19) * the whole document * ----- | 1-15 | |
| X | US 2006/206363 A1 (GOVE JEREMY J [US]) 14 September 2006 (2006-09-14) * the whole document * ----- | 1-15 | |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 19 April 2013 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 30 6426

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2013

| Patent document cited in search report | | Publication date | Patent family member(s) | | Publication date |
|---|---|---|---|---|---|
| EP 2413271 | A1 | 01-02-2012 | EP 2413271 A1<br>US 2012029954 A1<br>WO 2012013469 A1 | | 01-02-2012<br>02-02-2012<br>02-02-2012 |
| US 2007168245 | A1 | 19-07-2007 | EP 1974319 A2<br>US 2007168245 A1<br>WO 2007084515 A2 | | 01-10-2008<br>19-07-2007<br>26-07-2007 |
| US 2006206363 | A1 | 14-09-2006 | NONE | | |

EPO FORM P0459

For more details about this annex : see Official Journal of the European Patent Office, No. 12/82